# EUROPEAN PATENT APPLICATION

(11) **EP 1 985 442 A1**
(43) Date of publication of application: **29.10.2008**
(21) Application number: 07008664.0
(22) Date of filing: 27.04.2007
(51) Int. Cl.: B32B 27/08, B32B 15/08, B65D 81/34

(54) **Laminated film and its manufacture**

(71) Applicant: Nakamoto Packs Co., Ltd., Osaka-shi, Osaka 543-0012 (JP)
(72) Inventor: Sasaki, Hitoshi, Kawasaki-shi Kanagawa (JP); Okude, Seiichi c/o Nakamoto Packs Co., Ltd., Osaka (JP)
(74) Representative: Albrecht, Thomas

(57) **Abstract**

This invention relates to a laminated film for packaging food comprising a heat-resistant substrate layer, and elusion barrier layer and a sealant substrate layer arranged in this order, wherein
said substrate of the heat-resistant substrate layer is polyester or polyamide,
said elusion barrier layer doers not pass decomposition products of polyester or polyamide produced during retort sterilization, and
said elusion barrier layer is bonded to said sealant substrate layer through an adhesive resin layer by thermal lamination, and its manufacture.

## Description

### FIELD OF THE INVENTION

This invention relates to a laminated film containing a polyester or polyamide layer used for packages for foods subjected to retort sterilization, wherein decomposition products of polyester or polyamide produced during the retort sterilization do not migrate into the foods, which can be produced without conventional extrusion lamination or oil dry lamination, wherein organic solvent is used, and further; without aqueous dry lamination.

In general, laminates used as packaging material for foods comprises a heat-resistant substrate layer located as the outermost layer and a sealant substrate layer located as the innermost layer. The heat-resistant substrate layer is provided with prints which indicate trade name, instructions or as design for improving its commercial value. Usually, it is not so much that the heat-resistant layer is constructed as a single layer, but is frequently combined with other substrate layer(s).

Printing on the heat-resistant substrate layer is carried out by oil gravure printing. Representative methods applied to the lamination of other substrate layer(s) onto the heat-resistant substrate layer are extrusion lamination and oil dry lamination, and they are widely utilized. The extrusion lamination comprises coating the printing surface of the heat-resistant substrate layer with an anchor coating agent, such as imine-based one or urethane-based one, dissolved in a solvent, followed by drying, and then, extruding to laminate another substrate layer thereto (Masayoshi Araki, "Lamination Processing Handbook", pp 25-32, Kakogijutsu Kenkyu-Kai, 1978). The oil dry lamination comprises coating the printing surface of the heat-resistant substrate layer with polyurethane-based adhesive or the like, followed by drying, and then processing to laminate another substrate layer thereto (ibid, pp 14-18).

However, recently, solvent processes causes problems, such as noxious odor of the solvent in oil ink while printing, noxious odor while oil dry lamination, health problem in working atmosphere, risk of explosion, residual solvent odor of laminate product, contamination of environment around factory problems against CO₂ reduction, loss of solvent resources caused by evaporation. Moreover, it is necessary to meet the following regulations. Then, the oil gravure printing and oil dry lamination are being replaced by aqueous gravure printing and aqueous dry lamination (Japanese Patent No. 3249223, JP-A-2001-30611, JP-A-2002-96448, JP-A-2005-48046) .

The Fine Services Act., Revision (1990)
Designated volume of gravure ink is changed.
Second group petroleums 5001 → First group petroleums 2001.

The Prevention of Air Pollution and Noxious Odor Law, Revision (1994).
Xylene, toluene, ethylacetate, isobutanol, etc. are newly added.

The Labor Safety Hygience Law
Concentration of toluene in working atmosphere is changed from 100 ppm to 50 ppm.

The Product Responsibility Law (1995)
Decrease of residual solvent in prints is required. The PRTR Law (2001)
Notification of discharge volume of specific chemical substances, e.g. toluene, xylene and transferred volume in wastes is obligated.

Discharge Regulations of Hydrocarbons (2001, Preservation of Living Environment by Laws in Saitama Prefecture)
Factories using 500 kg/day or more of hydrocarbons or 5,000 kg/month or more of volatile substances must be equipped with a treating equipment with a removal rate of 80% or more.

However, the aqueous dry lamination requires material cost, energy cost and processing cost, and moreover, aging is necessary for 3 to 4 days at 40-60 °C after lamination which causes storage place problem.

In addition, applicable temperature of the laminates produced by the aqueous dry lamination is up to boiling sterilization due to their heat resistance and water resistance. Accordingly, they can be applied to foods without heating or to be boiled, but they cannot be applied to retort sterilization which is carried out at a higher temperature. Then, laminates used as a packaging material subjected to retort sterilization had to be produced by the oil dry lamination. However, the oil dry lamination has the following problems in addition to the aforementioned problems caused by the use of solvent, when the laminate product is used as a packaging material subjected to retort sterilization.

That is, in the oil dry lamination, toluene diisocyanate was used as curing agent for polyurethane adhesive, of which reaction rate is high. However, since there is a risk that toluene diisocyanate is converted to toluene diamine which has carcinogenicity during retort sterilization, it has been prohibited by FDA of USA. Now, toluene diisocyanate is replaced by an aliphatic isocyanate which increases unreacted materials caused by its slow reaction rate. Since migration speed in retort sterilization at a temperature exceeding 120 °C becomes about 10⁴ times that at ordinary temperature (20°C), the unreacted materials pass through the sealant substrate layer and they are effused into foods packaged therein to cause foreign taste and odor which are unfavorable in view of food hygience.

By the effusion test of plastic containers for medicine, Japanese Pharmacopoeia, 14^{th} Revision, which is a measure for such effluents, a laminate produced by the oil dry lamination was tested. The laminate was made into a pouch, and distilled water was placed therein. The pouch was heated at 121 °C for 1 hour, and after cooling it to room temperature, the maximum absorbances of the distilled water in UV region were measured, and found that they were much greater than the regulated value of 0.08 or less in the wavelength region of 220-240 nm and that of 0.05 or less in the wavelength region of 241-350 nm.

Besides, when a polyester film or polyamide film which has hydrophilic groups is used as a packaging material for foods for retort sterilization, hydrolysis occurs during retort sterilization, and the hydrolyzates permeate the sealant substrate layer to effuse into the content foods.

### SUMMARY OF THE INVENTION

An object of the invention is to provide a means for laminating a heat-resistant substrate layer and a sealant substrate layer, or further laminating an intermediate substrate layer, not using the aqueous dry lamination using solvent.

Another object of the invention is to provide a laminate capable of preventing hydrolyzates, which are produced by hydrolysis during retort sterilization, to permeate the sealant substrate layer to effuse into the packaged foods, even when using as a packaging material for retort sterilization.

The inventors investigated eagerly in order to solve the above problems, and as a result, it was found that, by employing polyester or polyamide as the heat-resistant substrate layer, a laminate capable of resisting retort sterilization can be obtained, by providing an elution barrier layer, permeation of products produced from the polyester or polyamide during retort sterilization can be stopped, and by using an adhesive resin layer, especially restricted adhesive resins for bonding the elution barrier layer to the sealant substrate layer, they can be laminated tight without using organic solvent and without damaging the sealant substrate layer and the elution barrier layer and can be resistant to retort sterilization.

Thus, the present invention provides a laminated film for packaging food comprising a heat-resistant substrate layer, and elusion barrier layer and a sealant substrate layer arranged in this order, wherein
said substrate of the heat-resistant substrate layer is polyester or polyamide,
said elusion barrier layer doers not pass decomposition products of polyester or polyamide produced during retort sterilization, and
said elusion barrier layer is bonded to said sealant substrate layer through an adhesive resin layer by thermal lamination, and
a method of manufacturing said laminate which comprises,
heating the adhesive resin layer located as a surface layer of a film up to a temperature higher than melting point of the adhesive resin by a heating roll, and
nipping the film with another film with a nipping roll with pressure to laminate them through the adhesive resin layer by thermal lamination.

### BRIEF DESCRIPTION OF THE INVENTION

Figure 1 is a schematic illustration of an apparatus which interposes an adhesive resin layer between substrate layers.
Figure 2 is a schematic illustration of an apparatus to manufacture a laminate of the invention by thermal lamination.
   11'· · · Heat-resistant substrate layer
   12 · · · Intermediate substrate layer
   13 · · · T-die extruder
   14 ... Adhesive resin layer
   15 ... Nip roll
   16 ... Nip roll
   17 · · · Laminate
   21 · · · Laminate of adhesive resin layer/sealant substrate layer
   21a ··· Surface of adhesive resin layer
   22 ··· Heat-resistant substrate layer
   22a ··· Printed face
   23 ··· Nip roll
   24 ··· Heating roll
   25 ··· Cooling roll
   26 ··· Laminate
   29 ··· Reverse roll

### DETAILED DESCRIPTION OF THE INVENTION

There are known various heat-resistant substrate layers, and however, in the laminate of the invention, polyester or polyamide is used therefore. Preferable polyesters are polyethylene terephthalete (PET) and polyethylene naphthalate (PEN), and PET is particularly preferable. Preferable polyamides are oriented, particularly biaxically stretched nylon.

A suitable thickness of the heat-resistant substrate layer is about 5 to 50 µm, preferably 10 to 30 µm. The thickness of less than 5 µm results in tearing by the tension while printing and difficulty in working. The thickness of exceeding 50 µm is unfavorable in view of cost.

When the heat-resistant substrate layer is printed, it is preferable that the print is provided by aqueous gravure printing because of greatly decreasing organic solvent. The aqueous gravure printing can meet various regulations by law, and solve the problems of noxious odor, health of workers, possibility of explosion, environmental pollution around the factory, reduction of CO₂ and loss of resources, and moreover, no residual solvent odor which is very important for food containers.

Typical aqueous gravure inks for aqueous gravure printing are prepared by dispersing about 10 to 30 wt. % of pigment and about 10 to 20 wt. % of vehicle into about 50 to 80 wt. % of a solvent mixture of 70 to 80 wt. % of water and 20 to 30 wt. % of water-miscible organic solvent, such as ethanol, n-propanol or isopropanol. Printing cylinder used for aqueous gravure printing may be identical with that for oil gravure printing, having a screen ruling of less than 200 lines by helio-carving at a stylus angle of 130 degrees and a depth of 35 µm or more. The printed heat-resistant substrate layer is then dried in the next drying process. Due to a large content of water, evaporation latent heat of aqueous gravure ink is about 4 to 5 times that of oil gravure ink, and requires quantity of heat thereby.

Blowing volume of air in the drying process may be about 40 to 70 m³/min which is applied in oil gravure printing, and in order to add heat efficiently, temperature of blowing air is set at about 80 to 150 °C. The higher the temperature of the blowing air is, the higher the printing speed is by the greater quantity of heat. Whereas, heat loss by the transfer to apparatus, etc. increases together with the elevation of temperature. Accordingly, it is preferable to set the temperature of the blowing air suitably which meets printing speed.

When printing speed is 120 m/min which is similar to the case of oil gravure printing, a suitable temperature of the blowing air is about 120 °C . Since the dried printed film (heat-resistant substrate layer) has been hot and elongated, slippage of printing occurs in the printing process of the next color. Thus, the printed film is previously cooled by providing a cooling process up to around the printing temperature in the next printing process.

In the cooling process, quantity of heat added to the printed film in the drying process is removed to render temperature of the film for printing almost the same in each printing unit. The film may be cooled only from the printed surface side, but it is preferable to be cooled also from the opposite surface. By cooling the film from both sides, cooling can be conducted efficiently, and the temperature of the film can be lowered to a prescribed value without lowering printing speed in the next printing process.

A cooling means of both sides of the film is to cool the printed surface by cooling wind and a cooling roll, and to cool the opposite surface by applying a liquid for cooling followed by blowing cooling wind to utilize latent heat of vaporization. By utilizing the vaporization of the liquid for cooling, cooling can be conducted efficiently through a simple structure. The cooling roll and blowing means of the cooling wind may be conventional.

The liquid for cooling removes heat by the latent heat of vaporization, and is required to have a great latent heat of vaporization, to have a low boiling point and a high vapor pressure to be easily vaporized, and to have a small surface tension in order to apply it uniformly. The liquid for cooling may be a single liquid or a mixture of two or more types. For example, it may be a lower alcohol having 1 to 4 carbon atoms, such as methanol or ethanol. However, in the case of increasing latent heat of vaporization, a liquid mixture containing water as principal component is preferable, because water has a great latent heat of vaporization. A preferable liquid to be mixed with water is water-miscible and compensates vaporization ability and low surface tension which are deficient in water.

The application of the liquid for cooling may be conducted by any means capable of applying it almost uniformly, such as spraying or roll coater. A preferable means is to use a molleton roll (a metal roll around which a raised cloth, such as flannel cloth, is wound), in the cloth of which the liquid for cooling immersed and is then contacted with the film on the cooling roll, because it can be applied uniformly with a simple apparatus.

To the surface applied with the liquid for cooling, cooling wind blows to accelerate the evaporation of the liquid. That is, since vapor of the liquid for cooling is removed from the vapor phase around the surface applied with the liquid, the evaporation is accelerated. Even if the applied liquid for cooling remains in a certain degree, the remaining liquid evaporates on the subsequent traveling line to cool the film, and the evaporation is finished prior to the next printing. As a result, temperature of the film is lowered to that of the printing on the previous printing process.

Prints may be added to other layers, such as the elution barrier layer or an intermediate substrate layer arranged between the heat-resistant substrate layer and the sealant substrate layer.

The elution barrier layer is provided for shielding or blocking products, especially hydrolyzates of polyester or polyamide having hydroxyl groups, generated during retort sterilization heated at a high temperature, so as not to enter the inside of bags made of the laminate of the invention. Preferred barrier layers are aluminum foil and poly (metha) acrylic acid/sugar layer.

The elution barrier layer is arranged on the sealant substrate layer side from the heat-resistant substrate layer. When one or more intermediate substrate layers are incorporated, the elution barrier layer is preferably located between the innermost intermediate substrate layer and the sealant substrate layer.

The poly (metha) acrylic acid means polyacrylic acid, polymethacrylic acid, copolymers of acrylic acid and methacrylic acid, or mixtures thereof. They may be partially neutralized. Sugar has a general formula of CnH2nOn, wherein n is an intergral number of 2-10, and illustrative of the sugars are glucose, mannose, galactose and xylose. The blending ratio of poly (metha) acrylic acid/sugar is 95/5 to 20/80 by weight. The poly (metha) acrylic acid/sugar coating composition is disclosed in JP 7-251485A, and is available from Kureha Chemical Ind. Co., Ltd Japan.

The sealant substrate layer is incorporated for adding heat sealability to the laminate on making bag, and located as the innermost layer which contact the food placed in the bag. Preferable substrates of the sealant substrate layer are linear low density polyethylene (LLDPE), high density polyethylene (HDPE) and polypropylene (PP).

Particularly preferable sealant layer is a combination of high density polyethylene (HDPE) layer having heat resistance and heat sealability and linear low density polyethylene (LLDPE) layer having flexibility and impact resistance. By rendering the sealant substrate layer multiple layer construction having at least a HDPE layer which is heat-resistant because of having a melting point of 130 °C or higher than that and a LLDPE layer which is excellent in flexibility and shock absorbing ability, the sealant substrate layer is excellent in resisting retort sterilization, and elution amount is made small. Moreover, the sealant substrate layer is excellent in flexibility and impact resistance. The multiplayer film having a HDPE layer and a LLDPE layer can be molded integrally by coextrusion. In order that the HDPE layer exhibits the above functions, it is located as the innermost layer of the infusion solution bag. The HDPE layer also functions as heat sealing layer.

The thickness of the sealant substrate layer is not by the use of the laminate or the like, and in general, 25 to 200 µm, particularly 30 to 150 µm is preferred. When the thickness is less than 25 µm, heat sealing becomes unsure to separate in the case of heavy contents. When the thickness is greater 200 µm, bags become stiff. In the case of pouche for foods of 30 g or less, a preferable thickness is 30 to 50 µm. In the case of heavy contents of 1 kg or more or an inner bag of a bag-in-box for 10 to 20 kg contents, a preferable thickness is 120 to 150 µm.

To the laminate of the invention, various intermediate substrate layers can be incorporated for importing various functions, such as, for improving physical distribution strength, e.g. resistance to pinholes, piercing resistance, dropping strength, etc., for improving gas barrier, or the like.

In order to improve physical distribution strength, O-NY film is preferable having a thickness of 15 to 25 µm.

In order to improve gas barrier, aluminum foil, EVOH film, PAN film, PVDC film, MXD-GNY film are preferable. Coatings of poly (metha) acrylic acid/sugar, PVDC, depositions of Al, Al₂O₃, SiOx, or PET film, OPP film, O-NY film are also applicable.

In the laminate of the invention, the elution barrier layer is bonded the sealant substrate layer though an adhesive resin layer by thermal lamination. Moreover, it is preferable that the heat-resistant substrate layer and optional intermediate substrate layer(s) are bonded by an adhesive resin layer.

The adhesive resin layer is composed of either of ethylene-unsaturated carboxylic acid anhydride-unsaturated carboxylic acid ester copolymer, ethylene-unsaturated carboxylic acid ester copolymer or ethylene-vinyl ester copolymer, and preferably a polyolefin having a melting point of 100 °C or more.

Illustrative of the unsaturated carboxylic acid anhydrides are maleic anhydride, itaconic anhydride, citraconic anhydride and dodecenyl succinic anhydride. Illustrative of the unsaturated carboxylic acid esters are methyl acrylate or methacrylate, ethyl acrylate or methacrylate, propyl acrylate or methacrylate, butyl acrylate or methacrylate, methyl fumarate, ethyl fumarate, propyl fumarate butyl fumarate, methyl maleate, ethyl maleate, propyl maleate and butyl maleate. Illustrative of vinyl esters are vinyl acetate and vinyl propionate. Two or more comonomers may be combined to produce the ethylene copolymers, and two or more ethylene copolymers may be blended.

A preferable melting point of the polyolefin is 100 to 160 °C, more preferable 115 to 130 °C. A suitable content of the polyolefin is not more than 70 wt. %, preferable not more than 50 wt. %. By blending the polyolefin, heat resistance can be gained capable of resisting sterilization at 121 °C. When the content of the polyolefin is beyond 70 wt. %, adhesive strength becomes insufficient. Illustrative of the polyolefin having a melting point of 100 °C or more are low density polyethylene, linear low density polyethylene, medium density polyethylene and high density polyethylene.

Another resin composition applicable to the adhesive resin layer is composed of ethylene copolymer containing unsaturated carboxylic acid anhydride having a melting point lower than the sealant layer, a compound having plural hydroxyl groups and a metal salt. A suitable content of the compound having plural hydroxyl groups is 5-50 wt. %, and a suitable metal salt content is 0.01-20 wt %. Since crosslinking reaction occurs in the resin composition, necessary heat resistance can be gained. Out of the above range is undesirable, because the content of the compound having plural hydroxyl groups of less than 5 wt. % results in insufficient crosslinking reaction, and the content beyond 50 wt.% degrades adhesiveness. The content of the metal salt of less than 0.01 wt. % cannot accelerate crosslinking reaction rate, and the content beyond 20 wt. % does not exhibit further acceleration of crosslinking, and therefore is undesirable in view of cost and resin strength.

Illustrative of the compounds having plural hydroxyl groups are partially saponified ethylene-vinyl acetate copolymer, ethylene-vinyl alcohol copolymer, polyvinyl alcohol, ethylene glycol, glycerin, 1,4-butanediol, 1,6-hexanediol, 1,8-octanediol, 1,10-decanediol, trimethylolmethane, trimethylolethane, trimethylolpropane, pentaerythritol, diethylene glycol, triethylene glycol, tetraethylene, polyethylene glycol, diglycerin, triglycerin, etc.

Illustrative of the metal salts are the salts of saturated or unsaturated fatty acids, such as lithium laurate, sodium laurate, calcium laurate, aluminum laurate, potassium myristate, sodium myristate, aluminum myristate, sodium palmitate, zinc palmitate, magnesium palmitate, sodium stearate, potassium stearate, calcium stearate, zinc stearate, sodium oleate, ionomers, etc.

Various additives may be added to the adhesive resin layer, such as antioxidant, lubricant, etc.

The thickness of the adhesive resin layer is preferably 1-40 µm, more preferably 3-30 µm. It is difficult to interpose uniformly the adhesive resin layer less than 1 µm in thickness, and the thickness beyond 40 µm does not increase adhesive strength but merely increases cost.

When a substrate layer to be bonded is polypropylene (PP) film, if bonding strength of the adhesive resin layer is insufficient, the PP film can be tightly bonded by blending 10 to 30 wt. % of PP with the adhesive resin. In the case that the substrate layer is LDPE film, LLDPE film or the like, the blend PP is not necessary.

The adhesive resin layer can be incorporated by extrusion using a T-die, containing on a substrate layer by using a die coater, or the like. When the sealant substrate layer is a LDPE film, LLDPE film, LLDPE/HDPE coextrusion film or PP film, the adhesive resin layer can be incorporated by coextrusion of adhesive resin layer/LDPE layer, adhesive resin layer/LLDPE layer, adhesive resin layer/LLDPE layer/HDPE layer or adhesive resin layer/PP layer.

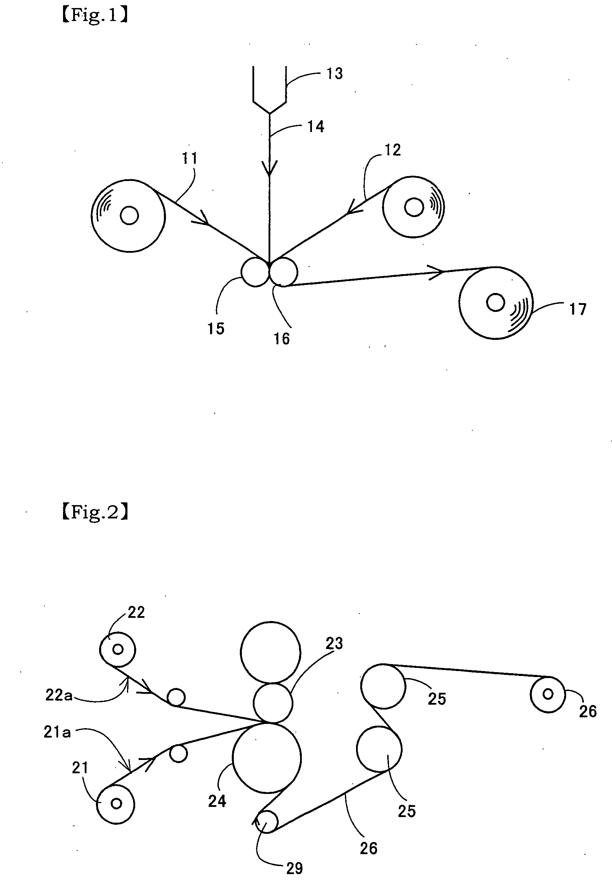

When the adhesive resin layer is incorporated by T-die extrusion, an apparatus illustrated in Fig. 1 can be applied. Heat-resistant substrate layer 11, intermediate substrate layer 12 (or sealant substrate layer) are delivered from their storage rolls, and adhesive resin layer is extruded from T-die 13, and nipped by passing between nip rolls 15, 16 to obtain a provisionally laminated laminate 17.

The total thickness of the laminated film is 35 to 200 µm, usually 50 to 150 µm.

Thermal lamination can be carried out, for example, using an apparatus shown in Fig. 2. In the case of a coextruded adhesive resin layer/sealant substrate layer, laminate 21 of adhesive resin layer/sealant substrate layer is delivered while the surface of the adhesive resin layer 21 a is treated by in-line corona treatment at 30-80 W · min/m², and heat-resistant layer 22 printed by aqueous gravure printing or the laminate 17 in Fig. 1 is delivered so that printed face 22a meets the surface of the adhesive resin layer 21a. They are nipped by nip roll 23 while heated by heating roll 24, and then cooled by cooling rolls 25. Thus, the laminate 21 of adhesive resin layer/sealant substrate layer is bonded to the heat-resistant substrate layer 22 by thermal lamination to complete a laminate 26 of heat-resistant substrate layer/print layer/adhesive resin layer/sealant substrate layer or heat-resistant substrate layer/adhesive resin layer/intermediate substrate layer/adhesive resin layer/sealant substrate layer.

In the case of laminate provisionally laminated by the T-die method, the provisionally laminated laminate is delivered similar to the above laminate 21 of adhesive resin layer/ sealant substrate layer, nipped as is by nip roll 23 with heating by heating roll 24, followed by cooling with cooling roll 25, to complete the laminate 26 by thermal lamination.

Even when bonding strength of the laminate is insufficient, strong bonding strength can be obtained by treating each face of the heat-resistant substrate layer, the intermediate substrate layer and/or the sealant substrate layer to be bonded by the adhesive resin layer, previously with corona treatment at 30 to 80 W · min/m².

The laminate of the invention can be used as various packaging materials for foods, medicines, etc., for example dry foods, such as rice crackers and cookie, processed agricultural products, such as bamboo sprout boiled in water and edible wild plant, processed meats, such as ham and sausage, seasonings, such as sauce and dressing, and retort foods, such as curry, rice gruel and Chinese foods, and particularly preferable as packaging materials exposed to high temperature, such as pouches for retort sterilization.

### EXAMPLES

### Example 1

A laminate to be served as retort packaging material was prepared to which elution barrier to prevent penetration of hydrolyzates into contents and gas barrier were imparted.

### Preparation of Heat-Resistant Substrate Layer/Elution Barrier · Gas Barrier Layer/Print Layer-Aqueous Gravure Printing

A PET film coated with 1 µm thick poly (metha) acrylic acid/sugar ("BESELA ET 110R", 13 µm in thickness Kureha Chemical Ind. Co., Ltd.) was used. The PET layer was the heat-resistant substrate layer, and the polymer coating layer was the elution barrier · gas barrier layer.

Gravure rolls were of which the plate cylinder was carved by heliogravure (stylus angle: 130 degrees, screen line number: 175 lines, carved depth: 42 µm). Each gravure roll was set in a five color gravure printing machine ("FM5S type", Fuji Kikai Kabushiki Kaisha). Inks were aqueous inks ("EXP 17009", Osaka Ink Co., Ltd.) diluted with diluent (15 vol. % water, 25 vol. % isopropyl alcohol, 30 vol. % methanol, 30 vol. % ethanol) manufactured by Osaka Ink Co., Ltd.) as follows:
Black: pigment content: 8 wt. %, viscosity: 16 sec. by Zahn cup No.3,
Indigo: pigment content: 10 wt. %, viscosity: 17 sec. by Zahn cup No.3,
Red : pigment content: 10 wt. %, viscosity: 16 sec. by Zahn cup No.3
Yellow: pigment content: 10 wt. %, viscosity: 16 sec. by Zahn cup No.3
White: pigment content: 18 wt. %, viscosity: 17 sec. by Zahn cup No.3

The polymer coating of the PET film was treated with corona treatment, and aqueous gravure printing was carried out thereon in the order of black-indigo-red-yellow-white. Printing speed was 120 m/min, and in each drying process, wind was blown at a rate of 60 m³/min, and drying temperature was 120 °C. In the next cooling process, cold wind at 30 °C blow toward the print layer, and then, cooled by a cooling roll at 30 °C .

Simultaneously, a molleton roll impregnated with a mixture of water (70 % by volume) and methanol (30 %) was contacted with the cooling roll to apply the mixture to the PET layer. Immediately after the application, cooling wind blow from cooling wind nozzles toward the applied surface at a blowing volume of 0.8 m²/min to cool the surface by evaporation. The temperature of the PET film descended to the temperature on the last printing.

### Preparation of Adhesive Resin Layer/Sealant Substrate Layer

Using an extruder ("EX-9032", aperture: 90mmϕ, L/d: 32, discharge: 200 kg/hr, Sumitomo Heavy Industries Ltd.), an adhesive resin was charged which was a mixture of 75 wt. % of ethylene-unsaturated carboxylic acid ester copolymer ("RB-3240", Japan Polyethylene Corp.), 10 wt. % of HDPE masterbatch having an epoxy content of 10 % and 15 wt. % of HDPE. The adhesive resin was extruded at an extrusion temperature of 280 °C to be laminated with a thickness of 15 µm to the LLDPE layer of HDPE layer (7 µm)/LLDPE (53 µm) layer laminated film 60 µm in thickness ("LR-124", Showa Denko Plastic Products Co., Ltd.) to prepare a sealant film (65 µm) of adhesive resin layer/LLDPE layer/HDPE layer.

### Preparation of Laminated Film by Thermal Lamination

Using the apparatus shown in Fig. 2, thermal lamination was carried out under the conditions described below. The laminate of PET layer/print layer (corresponding to 21) of which the point layer had been treated with corona treatment at 50 W · min/m² was delivered. Simultaneously, the laminate of adhesive resin layer/LLDPE layer/HDPE layer (corresponding to 22) was delivered, while the adhesive resin layer was treated with in-line corona treatment at 50 W · min/m² , and met the print layer. Then, they were pressed by nip roll 23 while heating by heating roll 24 from the PET layer side. After reversing by reverse roll 29. They were cooled by cooling rolls 25, 25 to obtain a laminated film of PET layer/poly (metha) acrylic acid · sugar layer/print layer/adhesive resin layer/LLDPE layer/HDPE layer.
Processsing speed: 75 m/min
Temperature of heating roll: 150 °C
Contact distance of laminate with heating roll: 70 cm (0.56 sec.)
Nip pressure: 20kg-cm

### Retort Sterilization

Pouches having an inside dimension of 14 cm X 18 cm were made by the laminated film locating the HDPE layer inside. 250 ml distilled water was charged in each pouch (250 ml/ 14 cm X 18cm X 2 = 0.5 ml/cm²), and retort sterilization was carried out at 121 °C for 1 hour.

### Appearance after Retort Sterilization

Appearance of each pouch after retort sterilization was evaluated by visual observation, and found it quite normal without delamination, abnormality in print, such as discoloration, etc.

### Organoleptic Test about Foreign Taste and Odor

Distilled water after the retort sterilization was tested by five panel members, and judged as to foreign taste and odor. As a result, all of five members judged that no foreign taste and odor were recognized as the same as original distilled water.

### UV Absorption Test

UV absorption spectra of the distilled water after retort sterilization were measured by a spectrophotometer ("Hitachi Ratiobeam Spectrophotometer U-1100", Hitachi Science Systems Co., Ltd.) accordingly to the elution test in Japanese Pharmacopoeia, 14^{th} Revision. The results are shown in table 1.

**Table 1**

| Wavelength | 220nm | 230nm | 240nm | 250nm | 260nm | 280nm | 300nm | 330nm | 350nm |
|---|---|---|---|---|---|---|---|---|---|
| -logT | 0.015 | 0.013 | 0.009 | 0.009 | 0.006 | 0.003 | 0.001 | 0.001 | 0.000 |

Due to small -logT values, it was confirmed that eluted matter generated by the hydrolysis of PET was shielded by the poly (metha) acrylic acid/ sugar layer.

### Lamination Strength Test

Prepared laminated film was cut into a width of 15 mm, and adhered portion was peeled by hand. Both peeled ends were fixed by chucks of a constant speed pulling tester. The initial distance between the chucks was set 50 mm. T-peel test was carried out at a speed pf 300 mm/min, with keeping unpeeled portion horizontal to determine the laminated strength between the adhesive resin layer and the print layer. As a result, it was confirmed that the laminated strength was very great.

### Oxygen Gas Barrier Ability

The oxygen gas barrier ability before and after the retort sterilization was measured at 30 °C under 80 % RH conditions by using an oxygen permeability measuring apparatus ("OX-TRAN", tradename, MODEL 2/21, manufactured by MOCON Co., Ltd. As a result, it was found that the oxygen gas barrier ability before the retort sterilization was 2.0 ml/m²· D · atm and that after the retort sterilization was 0.30 ml/m² · D · atm. Thus, it was confirmed that oxygen gas barrier ability was great irrespective of before or after the retort sterilization, and moreover, the oxygen gas barrier ability increased by retort sterilization.

### Comparative Example 1

Except that the poly (metha) acylic acid/ sugar layer was located on the outside, i.e. the PET layer was located on the inside, a laminated film was prepared similar to Example 1. That is, a laminated film of print layer/poly (metha) acrylic acid · sugar layer/PET layer/adhesive resin layer/LLDPE layer/ HDPE layer was prepared.

### UV Absorption Test

Similar to Example 1, UV absorption test was carried out. The results are shown in Table 2.

**Table 2**

| Wavelength | 220nm | 230nm | 240nm | 250nm | 260nm | 280nm | 300nm | 330nm | 350nm |
|---|---|---|---|---|---|---|---|---|---|
| -logT | 0.034 | 0.037 | 0.048 | 0.047 | 0.016 | 0.011 | 0.005 | 0.001 | 0.001 |

It was confirmed that hydrolyzates of PET having a great-logT and a maximum absorption around 240-250 nm permeated the adhesive resin layer/LLDPE layer/HDPE layer to elute into distilled water.

### Example 2

### Heat-Resistant Substrate Layer/Print Layer-Aqueous Gravure Printing

Using a PET film ("Espet T4102" Toyobo Co., Ltd.) having a thickness of 12 µn, a width of 1,000 mm and a length of 2,000 m of which one side had been corona treated, aqueous gravure printing was carried out quite similar to Example 1.

### Lamination of Intermediate Substrate Layer

As the intermediate substrate layer, O-NY film coated with poly (metha) acrylic acid/sugar coating 1 µm thick ("Besela AR" 16 µm in thickness, Kureha Chemical Ind. Co., Ltd.) was laminated to the above PET layer with aqueous gravure printing through an adhesive resin layer.

The lamination was carried out using the apparatus of Fig. 1. The print layer 0.5 µm thick and the O-NY layer were previously treated with corona treatment at 50 W · min/m². The laminate of PET layer/print layer (corresponding to 11) and the laminate of O-NY layer/poly (metha) acrylic acid · sugar layer (corresponding to 12) were delivered, and the same adhesive resin as Example 1 was extruded from the extruder 13 at 280 °C to laminate them so that the print layer and the O-NY layer were in contact with the adhesive resin layer to prepare a laminate of PET layer (12 µm)/print layer (0.5 µm)/adhesive resin layer (15 µm)/O-NY layer (15 µm)/poly (metha) acrylic acid · sugar layer (1 µm). The laminate (43.5 µm) was in a state of provisional bonding, because of not pressed with heating.

### Preparation of Adhesive Resin Layer/Sealant Substrate Layer

### The same as Example 1.

### Preparation of Laminated Film by Thermal Lamination

Using the apparatus shown in Fig. 2, thermal lamination was carried out under the conditions described below. The mixed polymer layer of poly (metha) acrylic acid/sugar of the laminate composed of PET layer/print layer/adhesive resin layer/O-NY layer/poly (metha) acrylic acid · sugar layer (corresponding to 21) was previously subjected to corona treatment at 50 W · min/m², and delivered so that the poly (metha) acrylic acid · sugar layer met the adhesive resin layer, which had been treated with in-line corona treatment at 50 W · min/m², of a laminate composed of adhesive resin layer/LLDPE payer/HDPE layer (corresponding to 22). Then, similar operations were carried out to Example 1 to obtain a laminated film 118.5 µm thick composed of PET layer (12 µm)/print layer (0.5 µm)/adhesive resin layer (15 µm)/O-NY layer (15 µm)/poly (metha) acrylic acid · sugar layer (1 µm)/adhesive resin layer (15 µm)/LLDPE layer (53 µm)/HDPE layer (7 µm).
Processing speed: 50 m/min
Temperature of heating roll: 150 °C
Contact distance of laminate with heating roll: 70 cm (0.84 sec.)
Nip pressure: 20 kg-cm
Retort Sterilization

Retort sterilization was carried out in a manner quite similar to Example 1.

### Appearance after Retort Sterilization

The results were the same as Example 1.

### Organoleptic Test about Foreign Taste and Odor

The results were the same as Example 1.

### UV Absorption Test

Measurement was carried out quite similar to Example 1, and the results are shown in Table 3.

**Table 3**

| Wavelength | 220nm | 230nm | 240nm | 250nm | 260nm | 280nm | 300nm | 330nm | 350nm |
|---|---|---|---|---|---|---|---|---|---|
| -logT | 0.017 | 0.016 | 0.014 | 0.010 | 0.007 | 0.003 | 0.001 | 0.000 | 0.000 |

Due to small -logT values, it was confirmed that eluted matter generated by the hydrolysis of PET was shielded by the poly (metha) acrylic acid/sugar layer.

### Lamination Strength Test

Laminated strength was measured in a manner quite similar to Example 1. As a result, it was found that, irrespective of before or after retort sterilization, lamination of both between PET/print and O-NY and between O-NY/polymer coating and sealant could not peeled, and it was confirmed that laminated strength was very great.

### Oxygen Gas Barrier Ability

The oxygen gas barrier ability before and after the retort sterilization was measured, and found that the oxygen gas barrier ability before the retort sterilization was 2.1 ml/m²· D · atm and that after the retort sterilization was 0.28 ml /m² · D · atm. Thus, it was confirmed that oxygen gas barrier ability was great irrespective of before or after the retort sterilization, and moreover, the oxygen gas barrier ability increased by retort sterilization.

### Comparative Example 2

Except that the position of the poly (metha) acrylic acid/sugar layer of the O-NY film coated with the mixed polymer ("Besela AR") was reversed, a laminated film was prepared similar to Example 2 to obtain a laminated film composed of PET layer/print layer/adhesive resin layer/poly (metha) acrylic acid · sugar layer/O-NY layer/adhesive resin layer/LLDPE layer/HDPE layer.

### UV Absorption Test

Similar to Example 2, retort sterilization and UV absorption test were carried out. The results are shown in Table 4.

**Table 4**

| Wavelength | 220nm | 230nm | 240nm | 250nm | 260nm | 280nm | 300nm | 330nm | 350nm |
|---|---|---|---|---|---|---|---|---|---|
| -logT | 0.046 | 0.045 | 0.051 | 0.049 | 0.015 | 0.010 | 0.004 | 0.001 | 0.001 |

It was confirmed that hydrolyzates O-NY having a great -logT and a maximum absorption around 240-250 nm permeated the adhesive resin layer /LLDPE layer/HDPE layer to elute into distilled water.

### Example 3

### Preparation of Heat-Resistant Substrate Layer/Print Layer- Aqueous Gravure Printing

This was the same as Example 2. That is, the PET film was printed by aqueous gravure printing to obtain a laminate of PET layer/print layer.

### Lamination with Intermediate Substrate Layer

Using an aluminum foil (Toyo Aluminum Co., Ltd., thickness: 9 µm, width: 1,000 mm, length: 2,000m) as an intermediate substrate layer as an elution barrier layer combined with an oxygen gas barrier layer, the aluminum foil was laminated to the above laminate of PET layer/print layer through an adhesive resin layer. The lamination was carried out using the apparatus shown in Fig. 1. The laminate (corresponding to 11) of which the print layer had been treated with corona treatment at 50 W ·min/m² and the aluminum foil were delivered and laminated by an adhesive resin, which was a mixture of 75 wt. % of ethylene-unsaturated carboxylic acid ester copolymer ("RB-3240", Japan Polyethylene Corp.), 10 wt. % of PP masterbatch having an epoxy content of 10 % and 15 wt. % of PP, extruded from an extruder ("EX-9032", aperture: 90mmϕ, L/D: 32, discharge: 200 kg/hr, Sumitomo Heavy Industries Ltd., corresponding to 13) at 280 °C , to obtain a laminate of PET layer/print layer/adhesive resin layer (15 µm)/AL foil layer (corresponding to 17). The laminate was in a state of provisional bonding, because of insufficient heating.

### Preparation of Adhesive Resin Layer/Sealant Substrate Layer

A three layer coextruder composed of a main extruder (90 mmϕ) and two sub-extruders (50 mmϕ) (manufactured by Modem Machinery Co., Ltd.) was used. Polypropylene ("PF380A", Sun Aromer Co., Ltd.) was charged into the main extruder, and an adhesive resin composed of 75 wt. % of ethylene-unsaturated carboxylic acid ester copolymer ("RB-3240", Japan Polyethylene Corp.), 10 wt. % of PP masterbatch having an epoxy content of 10 % and 15 wt. % of PP was charged into one of the sub-extruders, and co-extended at an extension temperature of 260 °C to obtain a laminate of adhesive resin layer (5 µm) /PP layer (55 µm).

### Preparation of Laminated Film by Thermal Lamination

Using the apparatus shown in Fig. 2, thermal lamination was carried out under the conditions described below. The laminate of PET layer/print layer/adhesive resin layer/A1 foil layer (corresponding to 21) was delivered. The laminate of adhesive resin layer/PP layer (corresponding to 22) was also delivered while the adhesive resin layer was treated with in-line corona treatment at 50 W · min/m², and met the Al foil layer. Then, similar operations were carried out to Example 1 to obtain a laminated film composed of PET layer/print layer/adhesive resin layer/Al foil layer /adhesive resin layer/PP layer.
Processing speed: 50 m/min
Temperature of heating roll: 190 °C
Contact distance of laminate with heating roll: 70 cm (0.84 sec.)
Nip pressure: 20 kg-cm

### Retort Sterilization

Retort sterilization was carried out in a manner quite similar to Example 1.

### Appearance after Retort Sterilization

The results were the same as Example 1.

### Organoleptic Test about Foreign Taste and Odor

The results were the same as Example 1.

### UV Absorption Test

Measurement was carried out quite similar to Example 1, and the results are shown in Table 5.

**Table 5**

| Wavelength | 220nm | 230nm | 240nm | 250nm | 260nm | 280nm | 300nm | 330nm | 350nm |
|---|---|---|---|---|---|---|---|---|---|
| -logT | 0.018 | 0.017 | 0.014 | 0.010 | 0.006 | 0.003 | 0.001 | 0.000 | 0.000 |

Due to small -logT values, it was confirmed that eluted matter generated by the hydrolysis of PET was shielded by the Al foil layer.

### Lamination Strength Test

Laminated strength was measured in a manner quite similar to Example 1. As a result, it was found that, irrespective of before or after retort sterilization, lamination of both between PET/print and Al foil and between Al foil and sealant could not peel, and it was confirmed that laminated strength was very great.

### Oxygen Gas Barrier Ability

The oxygen gas barrier ability before and after the retort sterilization was measured, and found that the oxygen gas barrier ability before the retort sterilization was 0.1 ml/m² · D · atm and that after the retort sterilization was 0.1 ml/m² · D · atm.

### Comparative Example 3

As an example of no elution barrier layer, a heat-resistant substrate layer was printed by oil gravure printing, and O-NY layer as an intermediate substrate layer and a HDPE layer/LLDPE layer as a sealant substrate layer were used, and laminated them by oil dry lamination.

A PET film 12 µm in thickness was printed by oil gravure printing by a plate cylinder having a stylus angle of 130 degrees, a screen line number of 175 lines and a carved depth of 42 µm using oil inks manufactured by Sakata Inks Co., Ltd. "Lamiol Mark III" in the order of black-indigo-red-yellow-white. The print layer and the O-NY layer 15 µm in thickness as the intermediate substrate layer were laminated by dry lamination using an oil two-component type polyurethane curing adhesive (Dainichi Seika Color & Chemicals Manufacturing Co., Ltd.) to prepare a laminate of PET layer/print layer/polyurethane adhesive layer/O-NY layer.

To the O-NY layer of this laminate, the LLDPE layer of LLDPE layer (53 µm)/HDPE layer (7 µm) sealant substrate layer was laminated by oil dry lamination to obtain a laminate of PET layer/print layer/polyurethane adhesive layer/O-NY layer/polyurethane adhesive layer/LLDPE layer/HDPE layer.

### UV Absorption Test

Similar to Example 2, retort sterilization and UV absorption test were carried out. The results are shown in Table 6.

**Table 6**

| Wavelength | 220nm | 230nm | 240nm | 250nm | 260nm | 280nm | 300nm | 330nm | 350nm |
|---|---|---|---|---|---|---|---|---|---|
| -logT | 0.288 | 0.191 | 0.130 | 0.093 | 0.030 | 0.015 | 0.005 | 0.001 | 0.001 |

From the test results, due to very great -logT values, it was confirmed that hydrolyzates of PET, and O-NY and unreacted (uncured) material were permeated O-NY layer, LLDPE layer and HDPE layer to be eluted into distilled water. This was not favorable in view of food hygiene and medical viewpoint. Regulations of Japan Pharmacopoeia, 14^{th} Revision "Elution Test in Testing Plastic Containers for Medicines" are as follows.
220-240 nm wavelength region: -logT 0.08 or less
241-350 nm wavelength region: -logT 0.05 or less

## Claims

1. A laminated film for packaging food comprising a heat-resistant substrate layer, and elusion barrier layer and a sealant substrate layer arranged in this order, wherein
said substrate of the heat-resistant substrate layer is polyester or polyamide,
said elusion barrier layer doers not pass decomposition products of polyester or polyamide produced during retort sterilization, and
said elusion barrier layer is bonded to said sealant substrate layer through an adhesive resin layer by thermal lamination.

2. The laminated film of claim 1, wherein said polyester is polyethylene terephthalate and said polyamide is oriented nylon.

3. The laminated film of claim 1, wherein said elution barrier layer is poly (metha) acrylic acid/sugar layer or aluminum foil.

4. The laminated film of claim 1, wherein the substrate of said sealant substrate layer is linear low density polyethylene, a mixture or a combined layers of linear low density polyethylene and high density polyethylene or polypropylene.

5. The laminated film of claim 1, wherein the adhesive resin of said adhesive resin layer is ethylene-unsaturated carboxylic acid anhydride-unsaturated carboxylic acid ester copolymer, ethylene-unsaturated carboxylic acid ester copolymer or ethylene-vinyl ester copolymer.

6. The laminated film of claim 1, wherein the adhesive resin of said adhesive resin layer is a combination of ethylene-unsaturated carboxylic acid anhydride-unsaturated carboxylic acid ester copolymer, ethylene-unsaturated carboxylic acid ester copolymer or ethylene-vinyl ester copolymer, and a polyolefin having a melting point of 100 °C or more, and content of the polyolefin resin is 70 wt. % or less.

7. The laminated film of claim 1, wherein the adhesive resin of said adhesive resin layer is a combination of 30 to 94.99 wt. % of an ethylene-based copolymer containing unsaturated carboxylic acid anhydride, 5 to 50 wt. % of a compound containing plural hydroxyl groups, and 0.01 to 20 wt. % of a metal salt.

8. A method of manufacturing the laminated film of claim 1 which comprises,
heating the adhesive resin layer located as a surface layer of a film up to a temperature higher than melting point of the adhesive resin by a heating roll, and
nipping the film with another film with a nipping roll with pressure to laminate them through the adhesive resin layer by thermal lamination.

9. The method of claim 8, wherein a film comprises the sealant substrate layer and the adhesive resin layer and another film comprises the heat-resistant substrate layer and the elution barrier layer.

10. The method of claim 9, wherein the elution barrier layer is poly (metha) acrylic acid/ sugar layer or aluminum foil.

11. The method of claim 9, wherein the adhesive resin of said adhesive resin layer is ethylene-unsaturated carboxylic acid anhydride-unsaturated carboxylic acid ester copolymer, ethylene-unsaturated carboxylic acid ester copolymer or ethylene-vinyl ester copolymer.
